# FASCICULE DE BREVET EUROPEEN

(11) **EP 1 193 996 B1**
(45) Date de publication et mention de la délivrance du brevet: **07.11.2007**
(21) Numéro de dépôt: 01402417.8
(22) Date de dépôt: 20.09.2001
(51) Int. Cl.: H04Q 11/00

(54) **Procédé de détection de sous-noeuds de commutation pour la commutation de multiplex à répartition de longueur d'onde**
Verfahren zum Detektieren von Unterteilungen in WDM Koppelfeld-Knoten
Method for detecting subdivisions in WDM switching nodes

(30) Priorité: 02.10.2000 FR 0012511
(43) Date de publication de la demande: 03.04.2002
(73) Titulaire: Alcatel Lucent, 75008 Paris (FR)
(72) Inventeur: Blaizot, Caroline, 78180 Montigny le Bretonneux (FR)
(74) Mandataire: Shamsaei Far, Hassan

(56) Documents cités:
- EP-A- 1 030 481
- HOESEL S VAN ET AL: "ROUTING AND MULTIPLEX BUNDLING IN A TRANSMISSION NETWORK" TELETRAFFIC AND DATATRAFFIC IN A PERIOD OF CHANGE. COPENHAGEN, JUNE 19 - 26, 1991, PROCEEDINGS OF THE INTERNATIONAL TELETRAFFIC CONGRESS, AMSTERDAM, NORTH HOLLAND, NL, vol. CONGRESS 13, 19 juin 1991 (1991-06-19), pages 401-406, XP000303059
- K. HARADA; K. SHIMIZU; T. KUDOU; T. OZEKI: "Hierarchical Optical Path Cross-Connect Systems for Large Scale WDM Networks" IEEE OFC/IOOC'99, 21 - 26 février 1999, pages 356-358, XP002175854
- GHANI N: "LAMBDA-LABELING: A FRAMEWORK FOR IP-OVER-WDM USING MPLS" OPTICAL NETWORKS MAGAZINE, SPIE, BELLINGHAM, WA, US, vol. 1, no. 2, avril 2000 (2000-04), pages 45-58, XP000969815 ISSN: 1388-6916

## Description

La présente invention se rapporte à un procédé de détection de sous-noeud d'un commutateur optique, pour la commutation de multiplex à répartition de longueur d'onde. De tels multiplex à répartition de longueur d'onde sont utilisés pour la transmission des données dans les réseaux de fibres optiques. L'invention s'applique au domaine des réseaux de transmission du type multiplex à répartition de longueurs d'onde et aux équipements de ces réseaux optiques tels que les commutateurs optiques.

Aujourd'hui, dans les réseaux optiques, les données sont transmises sur des faisceaux lumineux correspondant à plusieurs longueurs d'onde, avec un débit de l'ordre de 10 Gbit/s (10⁹ bit/s). Les faisceaux lumineux sont transmis par des fibres optiques. Pour effectuer le routage des données à travers le réseau, il est nécessaire de prévoir des blocs de commutation du type multiplex à répartition de longueur d'onde. La technologie de ces commutateurs permet de commuter le signal entrant directement sous sa forme optique. Il n'y a pas besoin de transformer les signaux lumineux en signaux électriques pour les commuter. Ces commutateurs optiques reçoivent en entrée un certain nombre de fibres optiques, chacune correspondant à plusieurs longueurs d'onde. En arrivant sur le commutateur optique, le signal lumineux est démultiplexé en longueurs d'onde, chaque longueur d'onde arrive alors sur un port du commutateur optique qui va assurer la commutation vers une fibre sortante. A la sortie du commutateur, les longueurs d'onde sont à nouveaux multiplexées. Les commutateurs ou noeuds de commutation sont donc des noeuds "mono-bloc" au sens où ils ne peuvent commuter que des longueurs d'onde. Il faut donc allouer à ces blocs de commutation autant de ports d'entrée et de sortie qu'il y a de longueurs d'onde à commuter.

Or, actuellement, les télécommunications connaissent un essor très important, ce qui se traduit par des besoins accrus en transmission de données. La transmission par fibres optiques n'échappent pas à ce phénomène et la quantité de données transmise par les réseaux optiques a considérablement augmenté. En effet, une fibre optique est désormais prévue pour transmettre de plus en plus de longueurs d'onde. On est capable de transmettre jusqu'à 256 longueurs d'onde par fibre optique.

Dans les réseaux optiques, les noeuds de commutation reçoivent de plus en plus de fibres et donc de plus en plus de longueurs d'onde à commuter. Concrètement, un commutateur optique peut par exemple avoir à commuter 100 fibres transportant 160 longueurs d'onde chacune, chaque longueur d'onde assurant un débit de données de 10 Gbit/s (10⁹ bit/s). Ce qui fait un débit total à commuter de 160 Tbit/s (10¹² bit/s). Le nombre total de longueurs d'onde rentrantes est de 16000. Si l'on veut commuter toutes les longueurs d'onde individuellement, il faudrait concevoir un commutateur optique avec un nombre de ports d'entrée et de sortie très important, soit 16000*16000 ports, ce qui n'est pas réalisable avec les matrices de commutation optiques actuelles. En effet, du fait du nombre très élevé de points de commutation, le contrôle électrique de telles matrices serait rendu trop complexe.

Or, avec des noeuds de cette taille, on peut imaginer qu'une partie du trafic vient de la même direction et va dans la même direction. Une solution pour diminuer le nombre de ports est donc de grouper les longueurs d'onde en bande et de les commuter ensemble, ainsi une partie du trafic pourrait être commuté en même temps en utilisant un seul port pour plusieurs longueurs d'onde.

Plus généralement, pour diminuer le nombre de ports, on peut vouloir commuter une partie du trafic total au niveau de la fibre, une autre partie au niveau de la bande et une dernière partie au niveau de la longueur d'onde. La commutation de multiplex complets de longueur d'onde, soit la commutation de fibre, la commutation de bandes de longueur d'onde, et la commutation de longueurs d'onde dans un même noeud optique correspondent à des commutations de capacité différente. Dans cette configuration, la planification des réseaux de multiplex à répartition de longueur d'onde est basée sur des commutateurs optiques qui présentent une architecture dite à « multi-granularité ».

La "granularité" est une notion qui se rapporte à des ensembles prédéfinis de ressources de transmission (typiquement les longueurs d'onde porteuses ou les multiplex de longueurs d'onde), les ressources d'un tel ensemble pouvant être considérées comme un tout pour certains traitements communs (typiquement la commutation). Une architecture à "multi-granularité" prend donc en compte différents niveaux de granularité pour commuter le trafic total au niveau d'un commutateur. Par exemple, une partie du trafic total peut être commutée au niveau dit "fibre", c'est-à-dire regroupant la totalité des longueurs d'onde susceptibles d'être véhiculées par une fibre optique, qui correspond donc au niveau de granularité le plus élevé. Une autre partie peut être commutée au niveau bande de longueurs d'onde, qui correspond à un niveau de granularité intermédiaire. Une dernière partie peut être commutée au niveau longueur d'onde, qui correspond au niveau de granularité le plus faible. Des niveaux intermédiaires de granularité peuvent encore être définis.

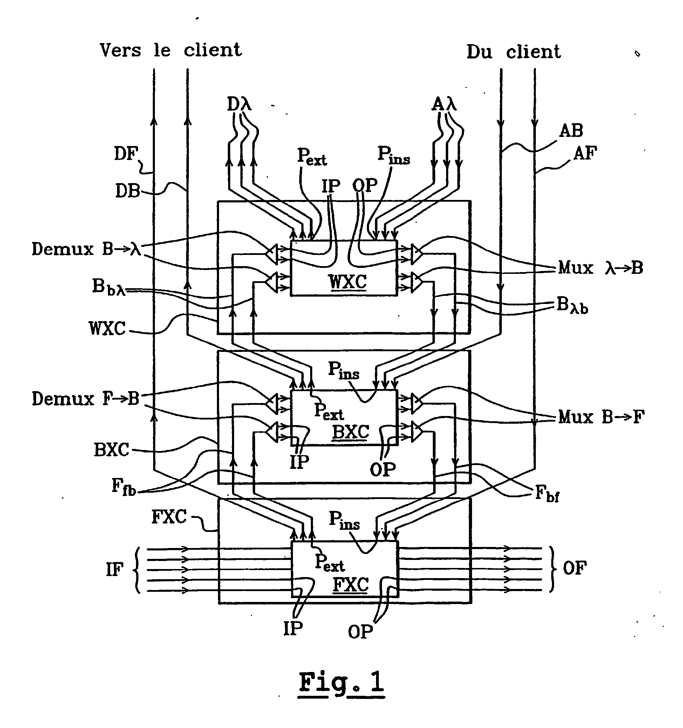

La **figure 1** présente un schéma d'un tel noeud de commutation optique avec une architecture à multi-granularité, selon l'art antérieur décrit par exemple dans le document "Hierarchical Optical Path Cross-Correct Systems for Large Scale WDM Networks" OFG /IOOG '99 21-02-1999 Conference Proceedings. Avec l'architecture à multi-granularité, on est passé de noeuds de commutation mono-blocs à des noeuds de commutation constitués d'un empilement de sous-noeuds. Chaque sous-noeud de commutation est défini par un niveau de granularité. Ainsi, le sous-noeud de commutation au niveau de granularité fibre FXC, le sous-noeud de commutation au niveau de granularité bande BXC, et le sous-noeud de commutation au niveau de granularité longueur d'onde WXC.

Sur la figure 1, les fibres entrantes IF sont d'abord envoyées sur les ports d'entrée IP du sous-noeud de commutation FXC. Parmi les fibres entrantes IF, quelques fibres sont directement commutées vers les fibres de sortie OF à travers les ports de sortie OP du sous-noeud de commutation FXC. Une fibre AF est directement insérée de chez le client sur un port d'insertion de fibre Pᵢₙₛ du sous-noeud de commutation FXC. Une fibre DF est extraite à partir d'un port d'extraction de fibre Pₑₓₜ du sous-noeud FXC et est envoyée vers le client. La fibre DF doit être démultiplexée en longueurs d'onde pour le client, mais les démultiplexeurs ne sont pas représentés sur la figure. Des fibres F_{bf} sont insérées à partir du sous-noeud de commutation BXC sur des ports d'insertion de fibre Pᵢₙₛ du sous-noeud FXC. Ces fibres F_{bf} proviennent du multiplexeur bande-fibre Mux B→F qui assure le multiplexage des bandes issues des ports de sortie OP du sous-noeud de commutation BXC. Enfin, des fibres F_{fb} sont extraites du sous-noeud FXC à travers des ports d'extraction et sont envoyées vers les ports d'entrée IP du sous-noeud BXC après démultiplexage des fibres en bandes dans le démultiplexeur fibre-bande demux F→B.

Le même processus de commutation se retrouve au niveau de granularité immédiatement inférieur, c'est-à-dire dans le sous-noeud de commutation au niveau de granularité bande BXC, ainsi qu'au niveau de granularité le plus faible, c'est-à-dire dans le sous-noeud de commutation au niveau de granularité longueur d'onde WXC.

Parmi les bandes qui arrivent sur les ports d'entrée IP du sous-noeud BXC, quelques-unes sont commutées vers les ports de sortie OP du sous-noeud BXC. Une bande AB est directement insérée de chez le client sur un port d'insertion du sous-noeud BXC. Une bande DB est extraite à travers un port d'extraction Pₑₓₜ du sous-noeud BXC et est envoyée vers le client. La bande DB doit être démultiplexée en longueurs d'onde pour Le client, mais les démultiplexeurs ne sont pas représentés sur la figure. Des bandes B_{λb} sont insérées à partir du sous-noeud de commutation WXC sur des ports d'insertion Pᵢₙₛ du sous-noeud BXC. Ces bandes B_{λb} proviennent du multiplexeur Mux λ→B, qui assure le multiplexage en bande des longueurs d'onde issues des ports de sortie OP du sous-noeud de commutation WXC. Enfin, des bandes B_{bλ} sont extraites du sous-noeud BXC à travers des ports d'extraction et sont envoyées vers les ports d'entrée IP du sous-noeud WXC après démultiplexage des bandes en longueurs d'onde dans le démultiplexeur bande-longueur d'onde demux B→λ.

Le même processus de commutation se retrouve encore une fois dans le sous-noeud WXC. Parmi les longueurs d'onde qui arrivent sur les ports d'entrée IP du sous-noeud WXC, quelques-unes sont commutées vers les ports de sortie OP du sous-noeud WXC. Des longueurs d'onde Aλ sont directement insérées de chez le client sur des ports d'insertion Pᵢₙₛ du sous-noeud WXC. Des longueurs d'onde Dλ sont extraites à travers des ports d'extraction du sous-noeud WXC et sont envoyées vers le client.

Or, le réseau est planifié sans aucune spécification au niveau des noeuds. Le routage du trafic est basé sur un algorithme qui donne le chemin le plus court en distance. Quant à l'allocation des ressources sur le réseau, elle est réalisée au niveau de la longueur d'onde. Bien que la planification soit seulement basée sur la granularité longueur d'onde, on peut observer que dans chaque noeud de commutation optique, une grande part du trafic peut être traitée aux niveaux fibre et bande, comme si c'était un comportement "naturel". Au niveau d'un noeud de commutation, tout le multiplex, ou une partie seulement du multiplex, vient de la même fibre entrante et va vers la même fibre sortante. La difficulté est justement de quantifier les différentes parties du trafic qu'il faut commuter respectivement à la granularité fibre, bande et longueur d'onde.

Ainsi, le problème technique qui se pose est de trouver un moyen de détecter les sous-noeuds effectivement nécessaires à la commutation et donc de mettre en place un procédé pour fractionner la matrice de commutation du noeud initial.

Un but de la présente invention est précisément de mettre en oeuvre un procédé permettant de réaliser une détection des sous-noeuds dans un noeud de commutation optique, de façon à pouvoir connaître pour chaque noeud, le trafic qui passe dans chaque sous-noeud et la taille des sous-noeuds considérés. Le procédé selon l'invention permet ainsi d'optimiser le nombre de ports nécessaires sur un noeud de commutation optique et par là-même d'optimiser les coûts de commutation en utilisant les granularités les plus larges pour la commutation à chaque fois que c'est possible.

A cet effet, l'invention prend comme base de départ sur laquelle sera mis en oeuvre le procédé, la matrice de commutation initiale du noeud monobloc dont on cherche à détecter les sous-noeuds. L'invention sélectionne ensuite pour chaque sous-noeud, les fibres, bandes de longueurs d'onde ou les longueurs d'onde respectant les contraintes de commutation correspondant à ce sous-noeud. On détecte, dans chaque noeud, quelle partie du trafic va pouvoir être traitée dans tel ou tel sous-noeud. Les contraintes de commutation se traduisent en terme de fibre entrante/fibre sortante et plus généralement en terme de granularité entrante/granularité sortante, ainsi qu'en terme de translation de longueur d'onde/translation de bande. Le procédé de détection est mis en oeuvre par l'intermédiaire d'un algorithme définissant toutes les étapes nécessaires à la détection.

L'invention concerne donc un procédé de détection des sous-noeuds dans un noeud de commutation optique du type multiplex à répartition de longueur d'onde, comme définni dans la revendication 1.

D'autres caractéristiques et avantages de l'invention apparaîtront plus clairement à la lecture de la description suivante d'un exemple particulier de réalisation en référence aux figures, dans lesquelles :
- la figure 1 est un schéma d'un noeud de commutation optique représentant une architecture à multi-granularité selon l'art antérieur, telle que décrite dans le préambule ci-dessus;
- la figure 2 est un schéma d'un noeud optique qui illustre la façon dont le trafic traverse le noeud mono-bloc initial;
- la figure 3 est un tableau récapitulatif des granularités considérées pour la mise en oeuvre du procédé selon l'invention;
- La figure 4 est un schéma illustrant la fonction de vérification par ricochet du lien avec une conversion; et
- les figures 5A, 5B, 6, 7, 8 et 9 illustrent les différentes étapes et sous-étapes du procédé selon l'invention.

Le procédé selon l'invention sera décrit pour un nombre de sous-noeuds devant être recherché égal à quatre, c'est-à-dire que quatre granularités ont été considérées, mais cet aspect ne doit pas apparaître comme limitatif de la portée du procédé selon l'invention.

La première phase du procédé selon l'invention consiste à recueillir du réseau des informations concernant la façon dont le trafic traverse le noeud mono-bloc initial. Dans cette étape, les paramètres d'entrée de l'algorithme mettant en oeuvre le procédé de détection selon l'invention sont définis.

En entrée, le procédé de détection part d'informations venant du constructeur du réseau et qui sont contenues dans la matrice de commutation initiale du noeud mono-bloc dont on cherche à détecter les sous-noeuds. Ces informations concernent à la fois le routage des données et l'allocation des ressources dans le réseau. En d'autres termes, pour chaque chemin optique, le procédé a besoin de savoir :
- avec quelle longueur d'onde le trafic entre et quitte le noeud,
- si la longueur d'onde est en addition ou en extraction et enfin,
- de quelle fibre vient la longueur d'onde et vers quelle fibre elle va.

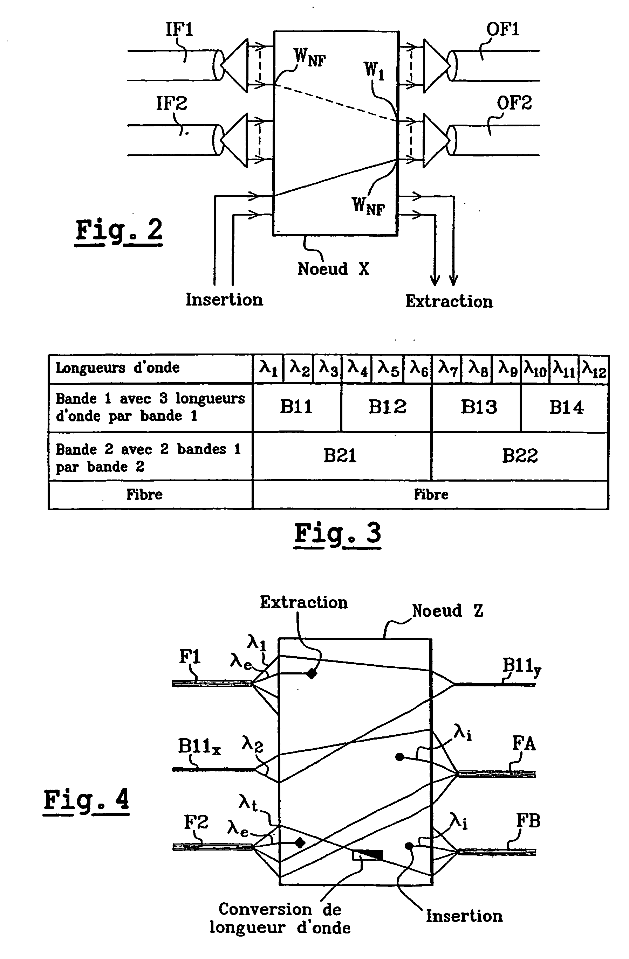

Ces informations, qui sont nécessaires à la mise en oeuvre du procédé selon l'invention, seront décrites en référence avec la figure 2.

La **figure 2,** est un schéma d'un noeud optique mono-bloc X qui comprend deux fibres entrantes IF1 et IF2 et deux fibres sortantes OF1 et OF2. Cette figure illustre la façon dont le trafic traverse le noeud mono-bloc initial et montre un exemple du type d'informations dont dispose le procédé en entrée. Ainsi, le chemin optique représenté en traits pointillés vient de la fibre entrante N°1 IF1 avec la dernière longueur d'onde Wnf du multiplex, et va vers la fibre de sortie N°2 OF2 avec la première longueur d'onde W1 du multiplex. Quant au chemin optique en trait plein, il est en insertion et il va vers la fibre de sortie N°2 OF2 avec la dernière longueur d'onde du multiplex Wnf.

La deuxième phase du procédé de détection selon l'invention consiste à définir les sous-noeuds devant être recherchés quant à leur niveau de granularité et leur fonction de commutation.

En effet, un sous-noeud est défini d'une part par son niveau de granularité et d'autre part par la fonction de commutation qui lui est associée. Pour le procédé selon l'invention, quatre granularités ont été considérées et sont répertoriées sur le tableau de la **figure 3 :**
- les longueurs d'onde λ1, λ2, λ3,..., λ12
- les bandes 1 de longueurs d'onde B11, B12, B13, B14
- les bandes 2 de bandes 1 B21, B22, et
- la fibre.

Dans cet exemple, N=12 est le nombre de longueurs d'onde par fibre, N1=3 est le nombre de longueurs d'onde par bande 1, et N2=6 est le nombre de longueurs d'onde par bande 2.

Le multiplex complet comprend les douze longueurs d'onde λ1, λ2, λ3,..., λ12. Les quatre bande 1 : B11, B12, B13, B14 comprennent chacune 3 longueurs d'onde. Ainsi, B11 est composée des longueurs d'onde λ1, λ2 et λ3; B12 est composée des longueurs d'onde λ4, λ5 et λ6; B13 est composée des longueurs d'onde λ7, λ8 et λ9; et B14 est composée des longueurs d'onde λ10, λ11 et λ12. Les deux bandes 2 : B21 et B22 comprennent chacune deux bandes 1, soit six longueurs d'onde. Ainsi, B21 est composée des six longueurs d'onde λ1 à λ6 et B22 est composée des six longueurs d'onde λ7 à λ12.

Les fonctions de commutation possibles sont "avec translation" ou "sans translation". Les translations peuvent être des translations de longueur d'onde ou bien des translations de bande. Avec une translation de longueur d'onde, n'importe quelle longueur d'onde peut être changée en n'importe quelle autre longueur d'onde. Avec une translation de bande, toutes les longueurs d'onde d'une bande sont translatées vers les longueurs d'onde d'une autre bande. Par exemple, la bande B11 du tableau de la figure 3 qui comprend les longueurs d'onde λ1, λ2 et λ3 peut être translatée vers la bande B13 qui comprend les longueurs d'onde λ7, λ8 et λ9.

Les sous-noeuds qui doivent être recherchés par le procédé de détection selon l'invention et qui résultent des granularités ainsi que des fonctions de commutation telles que précédemment décrites, en liaison avec la figure 3, sont les suivants :
- le sous-noeud de commutation optique de niveau fibre : F-OXC
- le sous-noeud de commutation optique de niveau bande 2 avec une fonction de routage direct, c'est-à-dire sans translation de bande : B2R-OXC
- le sous-noeud de commutation optique de niveau bande 2 avec translation de bande : B2T-OXC
- le sous-noeud de commutation optique de niveau bande 1 avec une fonction de routage direct, c'est-à-dire sans translation de bande : B1R-OXC
- le sous-noeud de commutation optique de niveau bande 1 avec translation de bande : B1T-OXC
- le sous-noeud de commutation optique de niveau longueur d'onde avec fonction de routage direct, c'est-à-dire sans translation de longueur d'onde : WR-OXC
- le sous-noeud de commutation optique de niveau longueur d'onde avec translation de longueur d'onde : WT-OXC

A niveau de granularité égale, on a donc deux blocs de commutation distincts, l'un étant prévu avec translation et l'autre étant prévu sans aucune translation. On peut donc considérer le noeud de commutation optique comme un empilement de sept blocs.

Deux autres blocs correspondant au multiplexeur d'insertion/extraction peuvent également être définis :
- le sous-noeud correspondant au multiplexeur d'insertion/extraction avec une fonction de routage direct, c'est-à-dire sans translation de longueur d'onde : WR-OADM
- le sous-noeud correspondant au multiplexeur d'insertion/extraction avec translation de longueur d'onde : WT-OADM

Dans la configuration des sous-blocs WR-OADM et WT-OADM, il n'est pas possible de mélanger le contenu des fibres. Les longueurs d'onde peuvent simplement être extraites de la fibre ou insérées dans la fibre, mais on reste toujours dans la même fibre.

Le processus de commutation permet au trafic de pouvoir aller d'un sous-noeud vers un autre, générant ainsi un trafic interne dans le noeud de commutation optique. Cependant, le procédé de détection selon l'invention impose une contrainte à ce trafic interne. Cette contrainte est la suivante : aucun trafic interne ne pourra être généré entre des sous-noeuds qui ont le même niveau de granularité. Le procédé ne permettra pas, pour un sous-noeud considéré, de commuter une partie du multiplex avec translation de longueur d'onde et l'autre partie du multiplex sans translation. Dans ce cas, si on détecte une seule translation, il sera nécessaire de tout commuter dans le sous-noeud qui présente la fonction de translation. A cause de cette contrainte sur le trafic interne, avant de sélectionner les ressources (multiplex, bandes, sous-bandes ou longueurs d'onde) pour un sous-noeud de commutation donné dépourvu de la fonction de translation, donc un sous-noeud de routage, il conviendra de vérifier que ces ressources ne sont pas liées avec une quelconque translation de longueur d'onde. En d'autres termes, il faut vérifier qu'une granularité n'est pas liée avec une quelconque translation avant de la détecter comme devant être commutée dans un sous-noeud de routage. Si cette contrainte n'était pas imposée, le procédé selon l'invention conduirait à des erreurs de détection. Pour respecter cette contrainte, l'algorithme de détection applique une fonction de vérification appelée fonction de vérification par ricochet du lien avec une conversion. Cette fonction est décrite en référence avec la **figure 4.**

L'exemple de la figure 4 montre une application de la fonction de vérification par ricochet du lien avec une conversion, basée sur une granularité longueur d'onde. La figure 4 présente un noeud de commutation Z avec des granularités entrantes et des granularités sortantes. Les granularités entrantes sont composées de deux fibres F1 et F2, et d'une bande de longueurs d'onde provenant d'un noeud X, B11_{X}. Les granularités sortantes sont également composées de deux fibres FA et FB, et d'une bande de longueurs d'onde qui va vers un noeud Y, B11_{Y}. Les losanges grisés signifie une fin de connexion. Les longueurs d'onde référencées λe sur la figure sont donc extraites du noeud Z à travers des ports d'extraction non représentés. Quant aux ronds grisés, ils signifient que du trafic est inséré dans le noeud. Les longueurs d'onde référencées λi sont donc insérées dans le noeud Z à travers des ports d'insertion non représentés. Le rectangle à demi grisé signifie un lien avec une conversion de longueur d'onde. La longueur d'onde λt subit donc une translation.

Dans cet exemple, le trafic de la fibre F1 n'est lié avec aucune conversion de longueur d'onde, il pourrait donc être commuté dans un sous-noeud WR-OXC. Mais, le lien avec une conversion de la première longueur d'onde λt de la fibre F2 oblige à commuter tout le trafic dans un sous-noeud du type WT-OXC. L'exemple nous montre dans ce cas précis, comment la fonction de vérification agit pour détecter un lien de conversion avec une longueur d'onde.

La fonction de vérification par ricochet est appliquée à la première longueur d'onde λ1 de la fibre F1. Le processus suivant se met en route :
- la fonction vérifie qu'aucune longueur d'onde du multiplex rentrant F1 n'est changée;
- la fonction vérifie qu'aucune longueur d'onde du multiplex sortant B11_{Y} n'est changée;
- la fonction est également appliquée à toutes les longueurs d'onde composant le multiplex entrant des longueurs d'onde composant le multiplex sortant, c'est l'effet "ricochet".

Dans l'exemple de la figure 4, la fonction de vérification va donc être rappelée pour la première longueur d'onde λ1 de la fibre F1 et pour la deuxième longueur d'onde λ2 de la bande B11_{X}. Or, un marquage est prévu pour indiquer qu'une longueur d'onde a déjà été vérifiée, ce qui permet d'éviter les tests redondants. C'est le cas pour la première longueur d'onde λ1 de la fibre F1 qui a déjà été vérifiée.

La fonction de vérification par ricochet est donc appliquée à la deuxième longueur d'onde λ2 de la bande B11_{X}. Comme à l'étape précédente, le processus suivant se met en route :
- la fonction vérifie qu'aucune longueur d'onde du multiplex entrant B11_{X} n'est changée. A partir de ce multiplex entrant B11_{X}, la fonction va être amenée à tester deux multiplex sortant B11_{Y} et FA, d'où :
   - la fonction vérifie qu'aucune longueur d'onde composant le multiplex sortant B11_{Y} n'est changée;
   - la fonction vérifie qu'aucune longueur d'onde composant le multiplex sortant FA n'est changée;
   - application de l'effet ricochet à partir du premier multiplex sortant pris en considération, B11_{Y}. La fonction de vérification par ricochet est rappelée pour toutes les longueurs d'onde composant le multiplex entrant des longueurs d'onde composant ce multiplex sortant B11_{Y}, soit la première longueur d'onde λ1 de la fibre F1 et la deuxième longueur d'onde λ2 de la bande B11_{X}. Or, grâce au marquage des longueurs d'onde, on sait que ces longueurs d'onde ont déjà été testées. Il est donc inutile de rappeler la fonction de vérification pour ces longueurs d'onde.
   - application de l'effet ricochet à partir de l'autre multiplex sortant pris en considération, la fibre FA. La fonction de vérification par ricochet est rappelée pour toutes les longueurs d'onde composant le multiplex entrant des longueurs d'onde composant ce multiplex sortant FA, soit les longueurs d'onde de la fibre F2 et de la bande B11_{X}. Les longueurs d'onde de la bande B11_{X} ont déjà été testées.

La fonction de vérification par ricochet est donc appliquée avec la première longueur d'onde λt de la fibre F2. Le même processus qu'aux étapes précédentes se met en route :
- la fonction vérifie qu'aucune longueur d'onde du multiplex entrant F2 n'est changée. Or, il y a une conversion de longueur d'onde. La fonction va détecter cette conversion et le traitement du multiplex entrant F2 est stoppé. On sait alors que le trafic ne pourra pas être commuté dans un sous-noeud de routage du type WR-OXC.

La fonction de vérification par ricochet du lien avec une conversion est donc appliquée en trois étapes qui se répètent en boucles. De façon générale, une première étape vérifie tout d'abord qu'aucune des longueurs d'onde d'une granularité entrante n'est liée avec une translation. Une deuxième étape consiste à vérifier qu'aucune des longueurs d'onde de la granularité sortante ou des granularités sortantes correspondant à la granularité entrante n'est liée avec une translation. Les granularités entrantes et sortantes sont dites correspondantes lorsqu'elles ont des longueurs d'onde en commun. Enfin, une troisième étape permet de mettre en oeuvre l'effet ricochet de la fonction de vérification. Cette étape consiste à appliquer de nouveau la fonction de vérification du lien avec une conversion, pour chacune des granularités entrantes, à toutes les longueurs d'onde composant la granularité entrante des longueurs d'onde composant la granularité sortante.

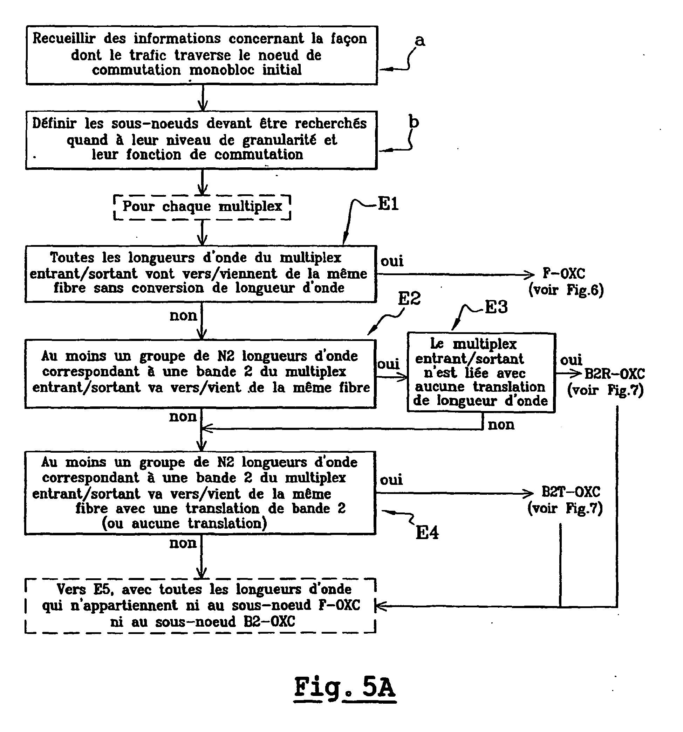

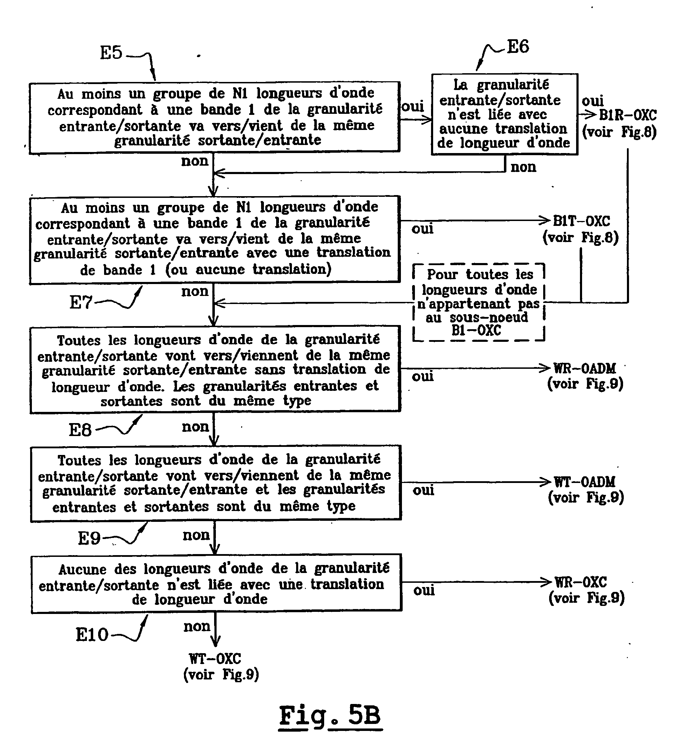

L'application au procédé de détection des sous-noeuds de cette fonction de vérification par ricochet sera vue plus tard en liaison avec les **figures 5A et 5B.**

La description du procédé selon l'invention est faite en liaison avec les figures 5A et 5B qui décrivent toutes les étapes des différentes phases du procédé selon l'invention ainsi que leur enchaînement. Il est à noter que les blocs en pointillées sur les figures 5A et 5B représentent des commentaires et non des étapes de l'algorithme.

On retrouve les deux premières phases du procédé selon l'invention déjà décrites en détail en référence aux figures 2 et 3, à savoir la phase a consistant à recueillir des informations concernant la façon dont le trafic traverse le noeud mono-bloc initial et la phase b consistant à définir les sous-noeuds devant être recherchés quant à leur niveau de granularité et leur fonction de commutation.

L'enchaînement des étapes E1 à E10, illustré aux figures 5A et 5B, se déroule en considérant chaque sous-noeud successivement dans un ordre correspondant à la diminution des contraintes de commutation. La contrainte de commutation la plus élevée correspond au niveau de granularité le plus gros, soit la fibre, et à une commutation sans translation de longueur d'onde. La contrainte de commutation la plus basse correspond au niveau de granularité le plus faible, soit la longueur d'onde, et à une commutation avec translation de longueur d'onde.

La détection se fait donc en partant du niveau de granularité le plus gros vers le niveau de granularité le plus faible, d'abord sans translation de longueur d'onde puis avec translation de longueur d'onde. Le choix de cet ordre permet la détection la plus complète en prenant en compte tous les sous-noeuds possibles.

Chacune des étapes E1 à E10 permet de sélectionner, pour chaque sous-noeud considéré, tout ou partie du trafic d'une granularité entrante qui satisfait aux contraintes de commutation du sous-noeud considéré. ,

Ainsi, pour chaque multiplex, un multiplex représentant toutes les longueurs d'onde d'une fibre, une première étape E1 consiste à regarder si toutes les longueurs d'onde du multiplex entrant vont vers la même fibre, sans conversion de longueur d'onde, et à regarder si toutes les longueurs d'onde du multiplex sortant viennent de la même fibre sans conversion de longueur d'onde. Il faut vérifier impérativement les deux sens.

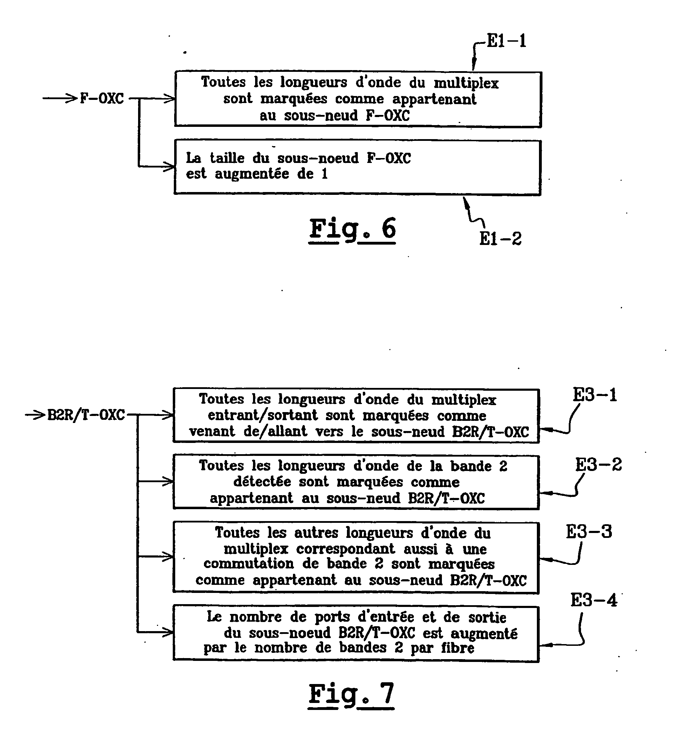

Lorsque les conditions de l'étape E1 sont réalisées, ceci signifie qu'un sous-noeud de niveau de granularité fibre a été identifié. Les paramètres de sortie de l'algorithme de détection vont être modifiés comme suit, en référence à la figure 6 qui décrit les sous-étapes E1-1 et E1-2 de l'étape E1.

D'une part, à la sous-étape E1-1, toutes les longueurs d'onde du multiplex considéré vont être "marquées" comme appartenant au sous-noeud de niveau de granularité fibre F-OXC. D'autre part, à la sous-étape E1-2, la taille du sous-noeud F-OXC va être augmentée de 1, c'est-à-dire que le nombre de ports alloués au sous-noeud F-OXC va être incrémenté de 1.

Lorsqu'un multiplex ne correspond pas aux critères de l'étape E1, le même traitement doit être appliqué, mais à un niveau de granularité inférieur, soit le niveau de granularité bande 2.

Ainsi, pour chaque multiplex qui ne satisfait pas à l'étape E1, une étape E2 consiste à regarder si au moins un groupe de N2 longueurs d'onde correspondant à une bande 2 du multiplex entrant va vers la même fibre, et si au moins un groupe de N2 longueurs d'onde correspondant à une bande 2 du multiplex sortant, vient de la même fibre. Si l'étape E2 est satisfaite, l'algorithme doit encore vérifier dans une étape E3 si les multiplex entrant et sortant ne sont liés avec aucune translation de longueur d'onde. L'algorithme va faire appel à la fonction de vérification par ricochet du lien avec une conversion pour l'appliquer au multiplex entrant. Il n'est pas nécessaire d'appliquer la fonction de vérification par ricochet du lien avec une conversion au multiplex sortant puisque au cours de l'application de cette fonction au multiplex entrant, le multiplex sortant sera vérifié. L'application de la fonction de vérification par ricochet au multiplex entrant a pour but de s'assurer que la granularité bande 2 n'est liée à aucune translation de longueur d'onde avant de la détecter comme devant être commutée dans le sous-noeud de routage B2R-OXC. La mise en oeuvre de cette fonction de vérification par ricochet a déjà été décrite plus haut en référence avec un exemple basé sur un niveau de granularité longueur d'onde.

Si l'application de la fonction de vérification par ricochet au multiplex entrant est un succès, les paramètres de sortie de l'algorithme de détection vont être modifiés comme suit, en référence avec la **figure 7** qui décrit les sous-étapes E3-1 à E3-4 des étapes E3 et E4. Dans ce cas de figure, où la figure 7 décrit les sous-étapes de l'étape E3, il faut lire B2R-OXC à la place de la référence B2R/T-OXC sur la figure 7.

Dans un premier temps, à la sous-étape E3-1, toutes les longueurs d'onde du multiplex entrant sont "marquées" comme venant du sous-noeud B2R-OXC et toutes les longueurs d'onde du multiplex sortant sont marquées comme allant vers le sous-noeud B2R-OXC. Un tel marquage trouve son intérêt en cas de trafic interne dans le noeud de commutation. En effet, il donne la possibilité de garder une trace du passage du multiplex dans le sous-noeud de commutation de niveau de granularité bande 2. Ainsi, l'algorithme de détection permet de déduire qu'une longueur d'onde de ce multiplex est entrée dans le noeud au niveau du sous-noeud bande 2. Cette donnée a un impact important sur le nombre de ports car il faut ajouter les ports d'insertion ou d'extraction du trafic interne.

Dans un second temps, à la sous-étape E3-2, toutes les longueurs d'onde de la bande 2 détectée sont marquées comme appartenant au sous-noeud de commutation B2R-OXC. Egalement, à la sous-étape E3-3, toutes les autres longueurs d'onde du multiplex correspondant aussi à une commutation de bande 2 sont marquées comme appartenant au sous-noeud de commutation B2R-OXC. Enfin, à la sous-étape E3-4, le nombre de ports d'entrée et de sortie du sous-noeud de commutation B2R-OXC est augmenté par le nombre de bande 2 par fibre.

Dans l'hypothèse où un multiplex ne correspond pas aux critères de l'étape E2 de l'algorithme de détection ou, s'il y a satisfait, l'appel à la fonction de vérification par ricochet dans l'étape E3 a démontré un lien avec une conversion de longueur d'onde, une étape E4 consiste à regarder si au moins un groupe de N2 longueurs d'onde correspondant à une bande 2 du multiplex entrant va vers la même fibre avec une translation de bande 2, et si ce groupe de N2 longeurs d'onde correspondant à une bande 2 du multiplex sortant vient de la même fibre avec une translation de bande 2.

Si c'est le cas, les paramètres de sortie de l'algorithme de détection vont être modifiés, et ce, de la même manière que dans le cas de la détection du sous-noeud de commutation B2R-OXC, en référence avec la figure 7. On retrouve donc les sous-étapes E3-1, E3-2, E3-3 et E3-4. La seule différence, c'est que l'on se trouve dans le cas de la détection du sous-noeud de commutation B2T-OXC. Il faut donc lire sur la figure 7 B2T-OXC à la place de la référence B2R/T-OXC.

Si la détection du sous-noeud de commutation B2R-OXC n'est pas réalisée avant la détection du sous-noeud de commutation B2T-OXC, le sous-noeud B2R-OXC ne sera jamais détecté. Dans ce cas, afin que tout le trafic correspondant à une commutation de bande 2 soit néanmoins pris en compte dans le sous-noeud de commutation B2T-OXC, on rajoute une contrainte dans l'étape E4 de l'algorithme de détection. Cette contrainte rajoutée est représentée entre parenthèse dans le bloc E4 de la figure 5A et consiste à regarder également si au moins un groupe de N2 longueurs d'onde correspondant à une bande 2 du multiplex entrant va vers la même fibre sans aucune translation, et si ce groupe de N2 longeurs d'onde correspondant à une bande 2 du multiplex sortant vient de la même fibre sans aucune translation.

La **figure 5B** représente la suite des étapes de l'algorithme concernant la détection des longueurs d'onde qui n'appartiennent ni à un sous-noeud de commutation du type F-OXC, ni à un sous-noeud de commutation du type B2-OXC.

Jusqu'à présent, les granularités entrantes et sortantes considérées étaient un multiplex complet. Mais les granularités entrantes et sortantes peuvent correspondre à un trafic de fibre, de bande 2 ou de bande 1. On parle donc de granularité entrante et de granularité sortante dans les étapes de la figure 5B de façon à garder une notation commune à toutes les étapes.

En référence à la figure 5B, l'étape E5 consiste à regarder si au moins un groupe de N1 longueurs d'onde correspondant à une bande 1 de la granularité entrante, soit une fibre ou une bande 2, va vers la même granularité sortante et si ce groupe de N1 longueurs d'onde correspondant à une bande 1 de la granularité sortante vient de la même granularité entrante. Si cette condition est satisfaite, l'algorithme doit encore vérifier si la granularité entrante n'est liée avec aucune conversion de longueur d'onde. Cette vérification est réalisée à l'étape E6. L'algorithme va faire appel à la fonction de vérification par ricochet du lien avec une conversion pour l'appliquer à la granularité entrante. De la même manière que pour le niveau de granularité bande 2 à l'étape E3, il n'est pas nécessaire d'appliquer cette fonction à la granularité sortante, cette dernière étant déjà vérifiée lors de l'application de la fonction à la granularité entrante. L'appel à la fonction de vérification par ricochet a pour but de s'assurer que la granularité entrante n'est liée à aucune translation de longueur d'onde avant de la détecter comme devant être commutée dans le sous-noeud de routage de niveau bande 1.

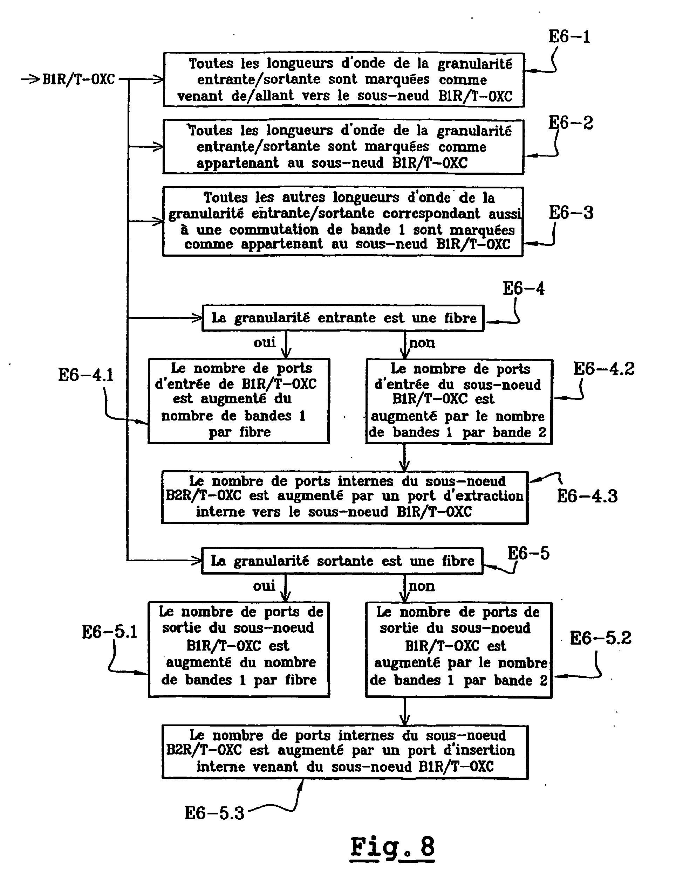

Ainsi, si l'application de la fonction de vérification par ricochet à la granularité entrante est un succès, les paramètres de sortie de l'algorithme de détection vont être modifiés comme suit, en référence avec la **figure 8** qui décrit les sous-étapes E6-1 à E6-3.5 des étapes E6 et E7. Dans ce cas de figure, il faut lire B1R-OXC sur la figure 8 à la place de B1R/T-OXC.

Dans un premier temps, la sous-étape E6-1 consiste à marquer toutes les longueurs d'onde de la granularité entrante comme venant du sous-noeud B1R-OXC et à marquer toutes les longueurs d'onde de la granularité sortante comme allant vers le sous-noeud B1R-OXC. De la même façon que précédemment, ce marquage a pour fonction de garder une trace du passage de la granularité entrante dans le sous-noeud de commutation de niveau de granularité bande 1. Ainsi, l'algorithme de détection permet de déduire qu'une longueur d'onde de cette granularité entrante est entrée dans le noeud au niveau du sous-noeud bande 1. Cette information est importante dans le cadre du trafic interne car il faut ajouter les ports d'insertion ou d'extraction. Dans un second temps, à la sous-étape E6-2, toutes les longueurs d'onde de la bande 1 détectée sont marquées comme appartenant au sous-noeud de commutation B1R-OXC. La sous-étape E6-3 consiste à marquer toutes les autres longueurs d'onde de la granularité entrante correspondant aussi à une commutation de bande 1 comme appartenant au sous-noeud de commutation B1R-OXC, et à marquer toutes les autres longueurs d'onde de la granularité sortante correspondant aussi à une commutation de bande 1 comme appartenant au sous-noeud B1R-OXC. Pour ce qui est de l'incrémentation des entrées du sous-noeud de commutation B1R-OXC, il faut distinguer deux cas :

La sous-étape E6-4 distingue le cas où la granularité entrante est une fibre. Dans ce cas, à la sous-étape E6-4.1, le nombre de ports d'entrée du sous-noeud de commutation B1R-OXC est augmenté du nombre de bandes 1 par fibre.

Si la sous-étape E6-4 permet de conclure que la granularité entrante n'est pas une fibre, alors la granularité entrante est une bande 2. On est dans la situation d'un trafic interne au noeud de commutation. La sous-étape E6-4.2 consiste alors à augmenter le nombre de ports d'entrée du sous-noeud de commutation B1R-OXC du nombre de bandes 1 par bande 2. De plus, la granularité entrante étant une bande 2, il est également nécessaire d'augmenter le nombre de port interne du sous-noeud B2R/T-OXC. La sous-étape E6-4.3 consiste donc à augmenter le nombre de ports internes du sous-noeud B2R/T-OXC par un port d'extraction interne vers le sous-noeud B1R-OXC.

Quant à l'incrémentation des sorties du sous-noeud de commutation B1R-OXC, il faut distinguer deux cas, de la même manière que pour les entrées.

La sous-étape E6-5 distingue le cas où la granularité sortante est une fibre. Dans ce cas, à la sous-étape E6-5.1, la taille de la sortie du sous-noeud de commutation B1R-OXC est augmentée du nombre de bandes 1 par fibre.

Sinon, la sous étape E6-5.2 consiste à augmenter le nombre de ports de sortie du sous-noeud de commutation B1R-OXC du nombre de bandes 1 par bande 2. De plus, la granularité sortante étant une bande 2, il est également nécessaire d'incrémenter le nombre de ports internes du sous-noeud B2R/T-OXC. La sous-étape E6-5.3 consiste donc à augmenter le nombre de ports internes du sous-noeud B2R/T-OXC par un port d'insertion interne venant du sous noeud B1R-OXC.

Dans l'hypothèse où une granularité entrante ne correspond pas aux contraintes de l'étape E5 de l'algorithme de détection ou, s'il y a satisfait, l'appel à la fonction de vérification par ricochet à l'étape E6 a démontré un lien avec une conversion de longueur d'onde, l'algorithme passe à l'étape suivante.

L'étape E7 consiste à regarder si au moins un groupe de N1 longueurs d'onde correspondant à une bande 1 de la granularité entrante va vers la même granularité sortante avec une translation de bande 1, et à regarder si au moins un groupe de N1 longueurs d'onde correspondant à une bande 1 de la granularité sortante vient de la même granularité entrante avec une translation de bande 1.

Si c'est le cas, les paramètres de sortie de l'algorithme de détection vont être modifiés conformément à la figure 8, et ce, de la même manière que dans le cas de la détection du sous-noeud de commutation B1R-OXC. On retrouve donc les sous-étapes E6-1 à E6-5.3. La seule différence, c'est que l'on se trouve dans le cas de la détection du sous-noeud de commutation B1T-OXC. Il faut donc lire B1T-OXC sur la figure 8 à la place de la référence B1R/T-OXC.

Si la détection du sous-noeud de commutation B1R-OXC n'est pas réalisée avant la détection du sous-noeud de commutation B1T-OXC, le sous-noeud B1R-OXC ne sera jamais détecté. Dans ce cas, afin que tout le trafic correspondant à une commutation de bande 1 soit néanmoins pris en compte dans le sous-noeud de commutation B1T-OXC, on rajoute une contrainte dans l'étape E7 de l'algorithme de détection. Cette contrainte rajoutée est représentée entre parenthèses dans le bloc E7 de la figure 5B et consiste à regarder également si au moins un groupe de N1 longueurs d'onde correspondant à une bande 1 de la granularité entrante va vers la même granularité sortante sans aucune translation, et si au moins un groupe de N1 longueurs d'onde correspondant à une bande 1 de la granularité sortante vient de la même granularité entrante sans aucune translation.

A ce stade, il reste encore à appliquer l'algorithme de détection à toutes les longueurs d'onde qui n'appartiennent ni à un sous-noeud de commutation du type F-OXC, ni à un sous-noeud de commutation du type B2-OXC, ni à un sous-noeud de commutation du type B1-OXC. C'est-à-dire tout le trafic restant qui n'a pas pu être traité à ces niveaux de granularité les plus larges. Les granularités entrantes et sortantes peuvent être un trafic de fibre, de bande 2 ou de bande 1.

L'étape E8 consiste à regarder si toutes les longueurs d'onde de la granularité entrante vont vers la même granularité sortante sans translation de longueur d'onde et si toutes les longueurs d'onde de la granularité sortante viennent de la même granularité entrante sans translation de longueur d'onde. L'étape E8 vérifie également si les granularités entrantes et sortantes sont du même type. Cette étape est prévue pour la détection du sous-noeud de commutation WR-OADM. Dans cette étape, on applique le fonction de vérification par ricochet du lien avec une conversion pour s'assurer que la granularité entrante n'est liée à aucune translation de longueur d'onde avant de la détecter comme devant être commutée dans le sous-noeud de commutation WR-OADM.

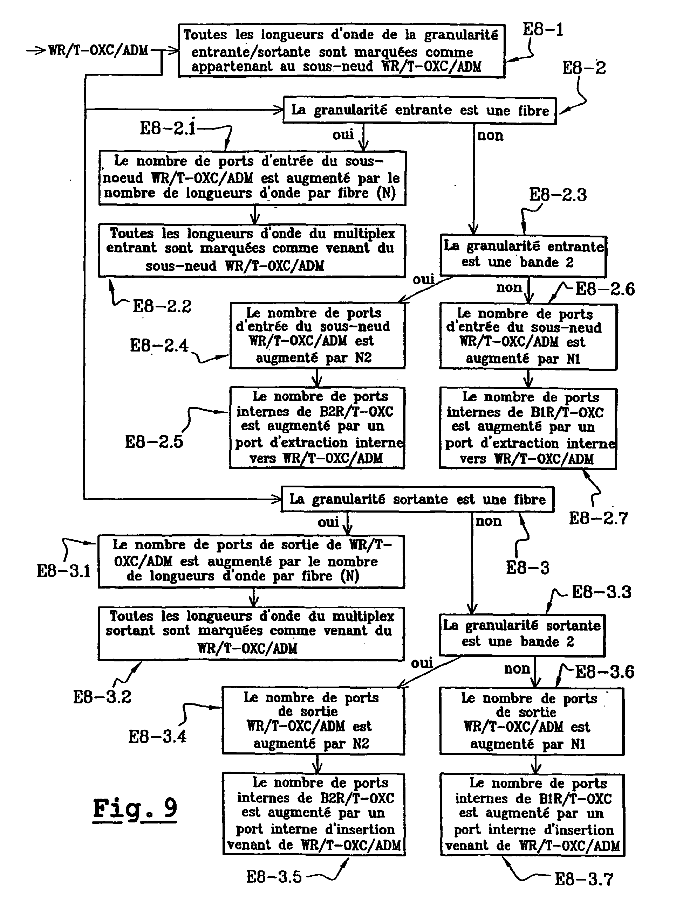

Si les deux conditions de E8 sont satisfaites, alors les paramètres de sortie de l'algorithme de détection vont être modifiés comme suit, en référence avec la **figure 9** qui décrit les sous-étapes E8-1 à E8-3.7 des étapes E8, E9 et E10. Dans ce cas de figure, il faut lire WR-OADM à la place de la référence WR/T-OXC/ADM sur la figure 9.

Dans un premier temps, la sous-étape E8-1 consiste à marquer toutes les longueurs d'onde de la granularité entrante comme appartenant au sous-noeud de commutation WR-OADM et à marquer toutes les longueurs d'onde de la granularité sortante comme appartenant au sous-noeud WR-OADM.

Quant à l'incrémentation des entrées et sorties du sous-noeud de commutation WR-OADM, il s'agit de distinguer plusieurs cas, suivant le type de granularité entrante.

Tout d'abord, à la sous-étape E8-2, on regarde si la granularité entrante est une fibre. Si c'est le cas, à la sous-étape E8-2.1, le nombre de ports d'entrée du sous-noeud WR-OADM est augmenté par le nombre de longueurs d'onde par fibre (N), et à la sous-étape E8-2.2, toutes les longueurs d'onde du multiplex entrant sont marquées comme venant du sous-noeud WR-OADM.

La sous-étape E8-2.3 détecte si la granularité entrante est une bande 2 grâce au marquage des longueurs d'onde comme venant de B2R/T-0XC. Si tel est le cas, alors la sous-étape E8-2.4 consiste à augmenter le nombre de ports d'entrée du sous-noeud WR-OADM par le nombre de longueurs d'onde par bande 2, N2. De plus, à l'étape E8-2.5, le nombre de ports internes du sous-noeud B2R/T-OXC est augmenté par un port d'extraction interne vers le sous-noeud WR-OADM.

Si la granularité entrante n'est pas une bande 2, la sous-étape E8-2.6 consiste à augmenter le nombre de ports d'entrée du sous-noeud WR-OADM par le nombre de longueurs d'onde par bande 1, N1. De plus, à l'étape E8-2.7, le nombre de ports internes du sous-noeud B1R/T-OXC va être incrémenté par un port d'extraction interne vers le sous-noeud WR-OADM.

En ce qui concerne les sorties, la sous-étape E8-3 consiste à regarder si la granularité sortante est une fibre. Si tel est le cas, la sous-étape E8-3.1 consiste à augmenter le nombre de ports de sortie du sous-noeud WR-OADM par le nombre de longueurs d'onde par fibre, N. De plus, à la sous-étape E8-3.2, toutes les longueurs d'onde du multiplex sortant sont marquées comme venant du sous-noeud WR-OADM.

La sous-étape E8-3.3 détecte si la granularité sortante est une bande 2 grâce au marquage des longueurs d'onde comme allant vers B2R/T-OXC. Dans ce cas, la sous-étape E8-3.4 consiste à augmenter le nombre de ports de sortie du sous-noeud WR-OADM par le nombre de longueurs d'onde par bande 2, N2. De plus, à la sous-étape E8-3.5, le nombre de ports internes du sous-noeud B2R/T-OXC va être incrémenté par un port d'insertion interne venant du sous-noeud WR-OADM.

Enfin, si la granularité sortante n'est pas une bande 2, la sous-étape E8-3.6 consiste à augmenter le nombre de ports de sortie du sous-noeud WR-OADM par le nombre de longueurs d'onde par bande 1, N1. De plus, à la sous-étape E8-3.7, le nombre de ports interne du sous-noeud B1R/T-OXC est augmenté par un port d'insertion interne venant du sous-noeud WR-OADM.

Dans le cas où la granularité entrante ne répond pas aux conditions de l'étape E8, l'étape E9, pour la détection du sous-noeud de commutation WT-OADM, consiste à regarder si toutes les longueurs d'onde de la granularité entrante vont vers la même granularité sortante et si toutes les longueurs d'onde de la granularité sortantes viennent de la granularité entrante. L'étape E9 vérifie également si les granularités entrantes et sortantes sont du même type. On ne se préoccupe pas ici de savoir s'il y a des conversions de longueurs d'onde.

Si les contraintes de E9 sont vérifiées par la granularité entrante et par la granularité sortante, les paramètres de sortie de l'algorithme de détection sont modifiés de la même manière que lors de la détection du sous-noeud de commutation WR-OADM en référence à la figure 9. On retrouve donc les sous-étapes E8-1 à E8-3.7, sauf qu'il faut lire WT-OADM à la place de la référence WR/T-OXC/ADM

Enfin, si aucune des conditions précédentes n'est vérifiée, l'algorithme prévoit une dernière étape E10. L'étape E10 correspond à la détection du sous-noeud de commutation de niveau de granularité le plus faible, WR/T-OXC. Ce sous-noeud permet de prendre en compte toutes les longueurs d'onde qui n'ont pas pu être commutées aux niveaux de granularité supérieurs. Le sous-noeud WR/T-OXC est le dernier sous-noeud à être détecté dans l'enchaînement des étapes de l'algorithme, c'est celui qui a les contraintes de commutation les plus faibles.

E10 consiste à regarder si aucune des longueurs d'onde de la granularité entrante n'est liée avec une conversion de longueur d'onde. Il est fait appel à la fonction de vérification par ricochet pour l'appliquer à la granularité entrante qui va ainsi vérifier pour la granularité sortante comme précédemment. On ne vérifie pas si les granularités entrantes et sortantes sont du même type.

Si l'application de la fonction de vérification par ricochet du lien de conversion sur la granularité entrante est un succès, c'est-à-dire qu'il n'y a aucune translation de longueur d'onde, cela signifie qu'un sous-noeud de commutation du type WR-OXC a été détecté. Les paramètres de sortie de l'algorithme de détection vont être modifiés de la même façon que précédemment lors de la détection des sous-noeuds WR-OADM et WT-OADM en référence à la figure 9. On retrouve les sous-étapes E8-1 à E8-3.7 de la figure 9 sauf qu'il faut lire WR-OXC à la place de la référence WR/T-OXC/ADM.

Par contre, s'il y a un lien avec une translation de longueur d'onde, il s'agit de la détection d'un sous-noeud de commutation du type WT-OXC. Les paramètres de sortie de l'algorithme de détection vont être modifiés de la même façon que pour la détection du sous-noeud de commutation WR-OXC. On retrouve les sous-étapes E8-1 à E8-3.7 conformément à la figure 9 sauf qu'il faut lire WT-OXC à la place de la référence WR/T-OXC/ADM.

Le procédé selon l'invention se déroule donc en quatre phases. Une première phase consiste à recueillir les informations concernant la façon dont le trafic traverse le noeud mono-bloc initial; une deuxième phase consiste à définir les sous-noeuds devant être recherchés quant à leur niveau de granularité et leur fonction de commutation; une troisième phase consiste à considérer chaque sous-noeud successivement dans un ordre correspondant à la diminution des contraintes de commutation, soit l'ordre donné par l'enchaînement des étapes E1 à E10; enfin une dernière phase consiste à sélectionner, pour chaque sous-noeud considéré, tout ou partie du trafic d'une granularité entrante qui satisfait aux contraintes de commutations du sous-noeud considéré. Cette dernière phase, qui est la phase de détection proprement dite, regroupe toutes les étapes E1 à E10. Ce sont les conditions posées à chacune des étapes E1 à E10 qui mettent en oeuvre cette phase de sélection proprement dite.

La dernière phase du procédé se décompose en plusieurs sous-phases qui permettent de disposer d'informations exploitables en sortie de l'algorithme. Notamment, à la fin du procédé, les informations recueillies permettent de donner des indications sur la façon dont le trafic interne se répartit dans le commutateur optique. L'algorithme de détection permet de garder une trace du passage du trafic dans tel ou tel sous-noeud du commutateur. Ce résultat est obtenu grâce au marquage de tout le trafic de la granularité entrante, dont tout ou partie seulement du trafic satisfait les contraintes de commutation d'un sous-noeud, comme venant du sous-noeud de commutation considéré et au marquage de tout le trafic de la granularité sortante comme allant vers le sous-noeud de commutation considéré. Cette sous-phase de marquage permettant de garder une trace du trafic interne est mise en oeuvre aux sous-étapes E3-1, E6-1 et E8-2.2 du procédé de détection qui correspondent respectivement au marquage des longueurs d'onde venant du sous-noeud B2R/T-OXC, au marquage des longueurs d'onde venant du sous-noeud B1T/T-OXC et au marquage des longueurs d'onde venant du sous-noeud WR/T-OXC/ADM.

Les informations obtenues à la fin du procédé permettent aussi de connaître la façon dont le trafic est distribué dans les sous-noeuds détectés. Ce résultat est obtenu grâce au marquage du trafic qui satisfait aux contraintes de commutation d'un sous-noeud considéré, comme appartenant à ce sous noeud. Cette sous-phase de marquage qui permet par la suite de distribuer le trafic dans les différents sous-noeuds, est mise en oeuvre aux sous-étapes E1-1, E3-2, E3-3, E6-2, E6-3 et E8-1 qui correspondent respectivement au marquage des longueurs d'onde appartenant au sous-noeud F-OXC, au marquage des longueurs d'onde appartenant au sous-noeud B2R/T-OXC, au marquage des longueurs d'onde appartenant au sous-noeud B1R/T-OXC et au marquage des longueurs d'onde appartenant au sous-noeud WR/T-OXC/ADM.

Enfin, l'algorithme de détection permet de donner la taille de chaque sous-noeud effectivement nécessaire à la commutation, c'est-à-dire le nombre de ports du sous-noeud. Ce résultat est obtenu grâce à l'augmentation du nombre de ports d'entrée et de sortie ainsi que du nombre de ports internes d'insertion et d'extraction d'un sous-noeud à chaque fois que tout ou partie du trafic d'une granularité entrante satisfait aux contraintes de commutation du sous-noeud considéré. Cette sous-phase qui consiste à augmenter le nombre de ports du sous-noeud considéré est réalisée aux sous-étapes suivantes E1-2, E3-4, E6-4.1 à E6-4.3, E6-5.1 à E6-5.3, E8-2.4 à E8-2.7 et E8-3.4 à E8-3.7 de l'algorithme de détection. L'augmentation du nombre de ports est bien sûr lié à la granularité entrante et sortante.

Le procédé de détection selon l'invention permet de représenter le noeud initial comme un empilement des sous-noeuds détectés.

## Revendications

1. Procédé de détection de sous-noeuds de commutation dans un noeud de commutation optique mono-bloc du type multiplex à répartition de longueur d'onde, chaque sous-noeud correspondant à un niveau de granularité donné et à une fonction de commutation donnée, lequel procédé est **caractérisé en ce qu'**il comprend les phases suivantes consistant à :
(a) recueillir des informations concernant la façon dont le trafic traverse le noeud de commutation mono-bloc initial;
(b) définir les sous-noeuds devant être recherchés quant à leur niveau de granularité et leur fonction de commutation;
(c) considérer chaque sous noeud successivement dans un ordre correspondant à la diminution des contraintes de commutation;
(d) sélectionner, pour chaque sous-noeud considéré, tout ou partie du trafic d'une granularité entrante et d'une granularité sortante qui satisfont aux contraintes de commutation du sous-noeud considéré (E1, E2, E3, . . . ., E10);
et **en ce que** le procédé applique une fonction de vérification par ricochet du lien d'une granularité avec une conversion de longueur d'onde qui comprend les étapes suivantes se répétant en boucle et consistant à :
- vérifier qu'aucune des longueurs d'onde de la granularité entrante n'est liée avec une conversion;
- vérifier qu'aucune des longueurs d'onde de la granularité sortante ou des granularités sortantes correspondante(s) à la granularité entrante n'est liée avec une conversion;
- vérifier du lien avec une conversion, pour chacune des granularités sortantes, à toutes les longueurs
- d'onde composant la granularité entrante des longueurs d'onde composant la granularité sortante ;
et **en ce que** chaque sous-noeud est considéré successivement dans un ordre comme correspondant à la diminution des contraintes de commutation et chaque sous-noeud correspond à un niveau de granularité et à une commutation sans ou avec conversion de longueur d'onde, les sous-noeuds devant être recherchés quant à leur niveau de granularité et leur commutation sans ou avec conversion de longueur d'onde.

2. Procédé selon la revendication 1, **caractérisé en ce que** les informations recueillies lors de la phase (a) sont les informations contenues dans la matrice de commutation initiale du noeud monobloc dont on cherche à détecter les sous-noeuds.

3. Procédé selon la revendication 1, **caractérisé en ce que** la phase (b) consiste à rechercher successivement:
(b1) le sous-noeud de commutation optique de niveau fibre (F-OXC, E1);
(b2) le sous-noeud de commutation optique de niveau bande avec une fonction de routage direct, c'est-à-dire sans translation de bande (B2R-OXC, E2, E3);
(b3) le sous-noeud de commutation optique de niveau bande avec translation de bande (B2T-OXC, E4);
(b4) le sous-noeud de commutation optique de niveau sous-bande avec une fonction de routage direct, c'est-à-dire sans translation de sous-bande (B1R-OXC, E5, E6);
(b5) le sous-noeud de commutation optique de niveau sous-bande avec translation de sous-bande (B1T-OXC, E7);
(b6) le sous-noeud de commutation optique de niveau longueur d'onde avec fonction de routage direct, c'est-à-dire sans translation de longueur d'onde (WR-OXC, E10);
(b7) le sous-noeud de commutation optique de niveau longueur d'onde avec translation de longueur d'onde (WT-OXC, E10).

4. Procédé selon la revendication 3, **caractérisé en ce qu'**il consiste à rechercher en outre :
(b8) le sous-noeud correspondant à un multiplexeur d'insertion/extraction avec une fonction de routage direct, c'est-à-dire sans translation de longueur d'onde (WR-OADM, E8);
(b9) le sous-noeud correspondant à un multiplexeur d'insertion/extraction avec translation de longueur d'onde (WT-OADM, E9).

5. Procédé selon l'une des revendications 1 à 4, **caractérisé en ce que** la phase (d) comprend les sous-phases suivantes consistant à :
(d1) marquer tout le trafic de la granularité entrante comme venant du sous-noeud considéré et tout le trafic de la granularité sortante comme allant vers le sous-noeud considéré (E3-1, E6-1, E8-2.2);
(d2) marquer le trafic qui satisfait aux contraintes de commutation du sous-noeud considéré comme appartenant à ce sous-noeud (E1-1, E3-2, E3-3, E6-2, E6-3, E8-1);
(d3) augmenter le nombre de ports du sous-noeud considéré (E1-2, E3-4, E6-4.1 à 3, E6-5.1 à 3, E8-2.4 à 7, E8-3.4 à 7).

6. Procédé selon la revendication 3 ou 4, **caractérisé en ce que** les étapes (b2), (b4), (b6) et (b8) mettent en oeuvre une fonction de vérification par ricochet du lien avec une conversion sur toute granularité entrante susceptible d'être commutée dans un sous-noeud de routage de manière à empêcher tout trafic interne entre des sous-noeuds ayant le même niveau de granularité.

7. Procédé selon la revendication 6 **caractérisé en ce que** la fonction de vérification par ricochet du lien avec une conversion comprend l'étape suivante:
- marquer les longueurs d'onde vérifiées de manière à éviter les rebouclages.

## Claims

1. Method of detecting switching subnodes in a monoblock wavelength division multiplex optical switching node, each subnode corresponding to a given level of granularity and to a given switching function, which method is **characterised in that** it includes the following steps:
(a) collecting information concerning the manner in which traffic is crossing the initial monoblock switching node;
(b) defining the granularity and switching function of the subnodes to be searched;
(c) considering each subnode successively in an order corresponding to reducing switching constraints;
(d) for each subnode considered, selecting all or part of the traffic of an incoming granularity and an outgoing granularity that satisfy the switching constraints of the subnode concerned (E1, E2, E3,....E10);
and **in that** the method applies a ricochet function for verification of the link of a granularity with a wavelength conversion that comprises the following steps repeated in a loop and comprising:
- verifying that none of the wavelengths of the incoming granularity is linked with a conversion;
- verifying that none of the wavelengths of the outgoing granularity or of the outgoing granularities corresponding to the incoming granularity is linked with a conversion;
- verifying the link with a conversion, for each of the outgoing granularities, to all the wavelengths constituting the incoming granularity of the wavelengths constituting the outgoing granularity;
and **in that** each sub-node is considered in succession in an order corresponding to decreasing switching constraints, and each sub-node corresponds to a level of granularity and to switching with or without wavelength conversion, the sub-nodes having to be searched for as to their level of granularity and their switching with or without wavelength conversion.

2. Method according to claim 1, **characterised in that** said information collected in step (a) is information contained in the initial switching matrix of the monoblock node whose subnodes are to be detected.

3. Method according to claim 1, **characterised in that** step (b) comprises searching successively:
(b1) the fibre level optical switching subnode (F-OXC, E1);
(b2) the band level optical switching subnode with a direct routing function, that is with no band translation (B2R-OXC, E2, E3);
(b3) the band level optical switching subnode with band translation (B2T-OXC, E4);
(b4) the subband level optical switching subnode with a direct routing function, that is with no subband translation (B1R-OXC, E5, E6);
(b5) the subband level optical switching subnode with subband translation (B1T-OXC, E7);
(b6) the wavelength level optical switching subnode with a direct routing function, that is with no wavelength translation (WR-OXC, E10); and
(b7) the wavelength level optical stitching subnode with wavelength translation (WT-OXC, E10).

4. Method according to claim 3, **characterised in that** it includes further searching:
(b8) the subnode corresponding to an add/drop multiplexer with a direct routing function, i.e. with no wavelength translation (WR-OADM, E8); and
(b9) the subnode corresponding to an add/drop multiplexer with wavelength translation (WT-OADM, E9).

5. Method according to anyone of claims 1 to 4, **characterised in that** step (d) includes the following substeps:
(d1) marking all of the traffic of the incoming granularity as coming from the subnode concerned and all the traffic of the outgoing granularity as going to the subnode concerned (E3-1, E6-1, E8-2.2);
(d2) marking the traffic that satisfied the switching constraints of the subnode concerned as belonging to that subnode (E1-1, E3-2, E3-3, E6-2, E6-3, E8-1); and
(d3) increasing the number of ports of the subnode concerned (E1-2, E3-4, E6-4.1 to 3, E6-5.1 to 3, E8-2.4 to 7, E8-3.4 to 7).

6. Method according to claim 3 or 4, **characterised in that** steps (b2), (b4), (b6) and (b8) use a ricochet function for verifying the link with a conversion on any incoming granularity that may be switched in a routing subnode to prevent all internal traffic between subnodes having the same level of granularity.

7. Method according to claim 6, **characterised in that** the ricochet function for verifying the link with a conversion includes the following step:
- marking the wavelengths verified to prevent looping.

## Patentansprüche

1. Verfahren zur Detektion von Vermittlungsunterteilungen in einem optischen Monoblock-Vermittlungsknoten vom Typ Wellenlängenmultiplex, wobei jede Unterteilung einer bestimmten Granularitätsebene und einer bestimmten Vermittlungsfunktion entspricht, wobei das Verfahren **dadurch gekennzeichnet ist, dass** es die folgenden Schritte umfasst:
(a) Sammeln von Informationen in Bezug auf die Art und Weise, wie der Verkehr den ursprünglichen Monoblock-Vermittlungsknoten durchläuft;
(b) Definition der Unterteilungen, die erfasst werden sollen, in Bezug auf ihre Granularitätsebene und ihre Vermittlungsfunktion;
(c) Aufeinander folgende Prüfung jeder Unterteilung in der Reihenfolge abnehmender Vermittlungsbedingungen;
(d) Auswahl des gesamten oder eines Teils des Verkehrs einer Eingangsgranularität und einer Ausgangsgranularität für jede betreffende Unterteilung, die die Vermittlungsbedingungen der betreffenden Unterteilung (E1, E2, E3, ... , E10) erfüllen;
sowie dadurch, dass das Verfahren eine Funktion zur indirekten Überprüfung auf die Verknüpfung einer Granularität mit einer Wellenlängeverschiebung anwendet, die die folgenden Schritte beinhaltet, die sich in einer Schleife wiederholen und Folgendes umfassen:
- Überprüfung, dass keine der Wellenlängen der Eingangsgranularität mit einer Verschiebung verknüpft ist;
- Überprüfung, dass keine der Wellenlänge der Ausgangsgranularität oder der Ausgangsgranularitäten, die der Eingangsgranularität entsprechen, mit einer Verschiebung verknüpft ist;
- Überprüfung der Verknüpfung mit einer Verbindung für jede Ausgangsgranularität bei allen Wellenlängen, aus denen die Eingangsgranularität der Wellenlängen, aus denen die Ausgangsgranularität besteht, zusammengesetzt ist;
sowie dadurch**,** dass jede Unterteilung nacheinander in der Reihenfolge abnehmender Vermittlungsbedingungen untersucht wird, und dass jede Unterteilung einer Granularitäts- und einer Vermittlungsstufe mit oder ohne Wellenlängenverschiebung entspricht, wobei die Unterteilungen in Bezug auf ihre Granularitätsebene und ihre Vermittlung mit oder ohne Wellenlängenverschiebung erfasst werden müssen.

2. Verfahren gemäß Anspruch 1, **dadurch gekennzeichnet, dass** es sich bei den in Phase (a) gesammelten Informationen um die Informationen handelt, die im ursprünglichen Koppelfeld des Monoblock-Knotens enthalten sind, dessen Unterteilungen man erfassen will.

3. Verfahren gemäß Anspruch 1, **dadurch gekennzeichnet, dass** Schritt (b) darin besteht nacheinander Folgendes zu untersuchen:
(b1) die optische Vermittlungsunterteilung im Bereich der Faser (F-OXC, E1);
(b2) die optische Vermittlungsunterteilung im Bereich des Frequenzbands mit direkter Routingfunktion, d.h. ohne Frequenzbandverschiebung (B2R-OXC, E2, E3);
(b3) die optische Vermittlungsunterteilung im Bereich des Frequenzbands mit Frequenzbandverschiebung (B2T-OXC, E4);
(b4) die optische Vermittlungsunterteilung im Bereich des Teilfrequenzbands mit direkter Routingfunktion, d.h. ohne Teilfrequenzband-Verschiebung (B1R-OXC, E5, E6);
(b5) die optische Vermittlungsunterteilung im Bereich des Teilfrequenzbands mit Teilfrequenzband-Verschiebung (B1T-OXC, E7);
(b6) die optische Vermittlungsunterteilung im Bereich der Wellenlänge mit direkter Routingfunktion, d.h. ohne Wellenlängenverschiebung (WR-OXC, E10);
(b7) die optische Vermittlungsunterteilung im Bereich der Wellenlänge mit Wellenlängenverschiebung (WT-OXC, E10).

4. Verfahren gemäß Anspruch 3, **dadurch gekennzeichnet, dass** es darin besteht, unter anderem Folgendes zu untersuchen:
(b8) die Unterteilung, die einem Einfüge-/Extraktions-Multiplexer mit direkter Rontingfunktion entspricht, d.h. ohne Wellenlängenverschiebung (WR-OADM, E8);
(b9) die Unterteilung, die einem Einfüge-/Extraktions-Multiplexer mit Wellenlängenverschiebung entspricht (WT-OADM, E9).

5. Verfahren gemäß einem der Ansprüche 1 bis 4, **dadurch gekennzeichnet, dass** Schritt (d) die Folgenden Teilschritte umfasst:
(d1) Markierung des gesamten Verkehrs der Eingangsgranularität als von der betreffenden Unterteilung stammen, und des gesamten Verkehrs der Ausgangsgranularität als an die betreffende Unterteilung weitergeleitet (E3-1, E6-1, E8-2.2);
(d2) Markierung des Verkehrs, der die Vermittlungsbedingungen der betreffenden Unterteilung erfüllt, als zu dieser Unterteilung gehörig (E1-1, E3-2, E3-3, E6-2, E6-3, E8-1);
(d3) Erhöhung der Anzahl an Anschlüssen der betreffenden Unterteilung (E1-2, E3-4, E6-4.1 bis 3, E6-5.1 bis 3, E8-2.4 bis 7, E8-3.4 bis 7).

6. Verfahren gemäß Anspruch 3 oder 4, **dadurch gekennzeichnet, dass** in den Schritten (b2), (b4), (b6) und (b8) eine Funktion zur indirekten Überprüfung der Verknüpfung für die gesamte Eingangsgranularität ausgeführt wird, die an eine Routingunterteilung übertragen werden keinen, zum zu verhindern, dass interner Verkehr mit der gleichen Granularitätsebene in den Unterteilungen ankommt.

7. Verfahren gemäß Anspruch 6, **dadurch gekennzeichnet, dass** die Funktion zur indirekten Überprüfung einer Verknüpfung mit einer Verschiebung den folgenden Schritt umfasst:
- Markierung der überprüften Wellenlängen, um Wiederholungsschleifen zu verhindern.
